# EUROPEAN PATENT SPECIFICATION

(11) **EP 0 674 409 B1**
(45) Date of publication and mention of the grant of the patent: **01.06.2005**
(21) Application number: 95106654.7
(22) Date of filing: 27.08.1991
(51) Int. Cl.: H04L 12/26, H04L 12/56

(54) **Apparatus for testing ATM channels**
Gerät zum Testen von ATM-Vermittlungskanälen
Dispositif pour tester des canaux ATM

(30) Priority: 27.08.1990 JP 22242590; 20.10.1990 JP 28262890; 20.10.1990 JP 28304390
(43) Date of publication of application: 27.09.1995
(62) Divisional of application: 91114341.0
(73) Proprietor: FUJITSU LIMITED, Kawasaki-shi, Kanagawa 211 (JP)
(72) Inventor: Uchida, Yoshihiro, Takatsu-ku, Kawasaki-shi, Kanagawa 213 (JP); Kakuma, Satoshi, Kawasaki-shi, Kanagawa 211 (JP); Izawa, Naoyuki, Mitaka-shi, Tokyo 181 (JP); Aso, Yasuhiro, Tokyo 176 (JP); Yoshimura, Shuji, 303 Kuji Bldg., 712, Kuji, Kawasaki-shi, Kanagawa 213 (JP); Murayama, Masami, Yokohama-shi, Kanagawa 227 (JP)
(74) Representative: Lehn, Werner, Dipl.-Ing.

(56) References cited:
- EP-A- 0 351 014
- US-A- 4 486 877
- R.W. MUISE ET AL: "Experiments in wideband packet technology" 1986 INTERNATIONAL ZURICH SEMINAR ON DIGITAL COMMUNICATIONS, 11 - 13 March 1986, ZÜRICH, CH, pages 135-139, XP002037845
- "Method and arrangement for testing switch-network components" IBM TECHNICAL DISCLOSURE BULLETIN, vol. 31, no. 8, 1901 - 1989, ARMONK, NY, US, pages 414-427, XP002037846

## Description

### Background of the Invention

### Field of the Invention

This invention pertains to a digital switching system and more particularly to an apparatus for testing ATM (Asynchronous Transfer Mode) channels, according to a multi-stage self-routing method, to integrally switch information having different traffic characteristics, such as moving images, numerical data and voices, by using an ATM transmission system like a broadband ISDN.

### Description of the Related Art

With the widespread use of data communication, public switched networks are now required to execute high-quality data communication, as well as the traditional voice communication.

A Broadband Integrated Services Digital Network (B-ISDN) has begun to be utilized as a communication network not only for low-speed data, such as voice data, but also for high-speed data between 150 Mbps and 600 Mbps, such as moving images, and various interfaces have begun to be standardized. CCITT (International Telegraph and Telephone Consultative Committee) is currently working on its advisory report on the ATM transmission system, which is an essential technology for realizing a B-ISDN, to be submitted in 1992.

An ATM communication network transmits and exchanges information of different bands divided and housed in fixed-length data units called cells, to which headers are added. A header contains a virtual channel identifier (VCI) for identifying the receiving side subscriber. Thus, an ATM switching system uses the headers to enable hardware to transfer and switch cells to the receiving side subscriber at a high speed.

Since an ATM system requires cells to carry only necessary information, it can more efficiently transmit burst signals than a conventional STM (Synchronous Transfer Mode) system. Also, unlike a conventional packet switching system that has a processor to switch cells equivalent to packets through software processing, since an ATM system has hardware provided in a channel switch cells, it does not require complex protocols in switching cells, which realizes high speed communication at up to several hundred mega bits a second.

This makes it possible to flexibly provide services requiring different transmission speeds, and to efficiently utilize transmission paths.

In this operation, according to the VCI attached to a cell, a switching system processor designates to which buffer in a switch of the ATM switching system the cell is to be written. The cells flow autonomously in the network according to this designation. Hence, this switching operating is called a self-routing (SR). The receiving side subscriber extracts necessary cells flowing over ATM highways based on the VCIs attached to cells, and restores user information by eliminating headers from the cells.

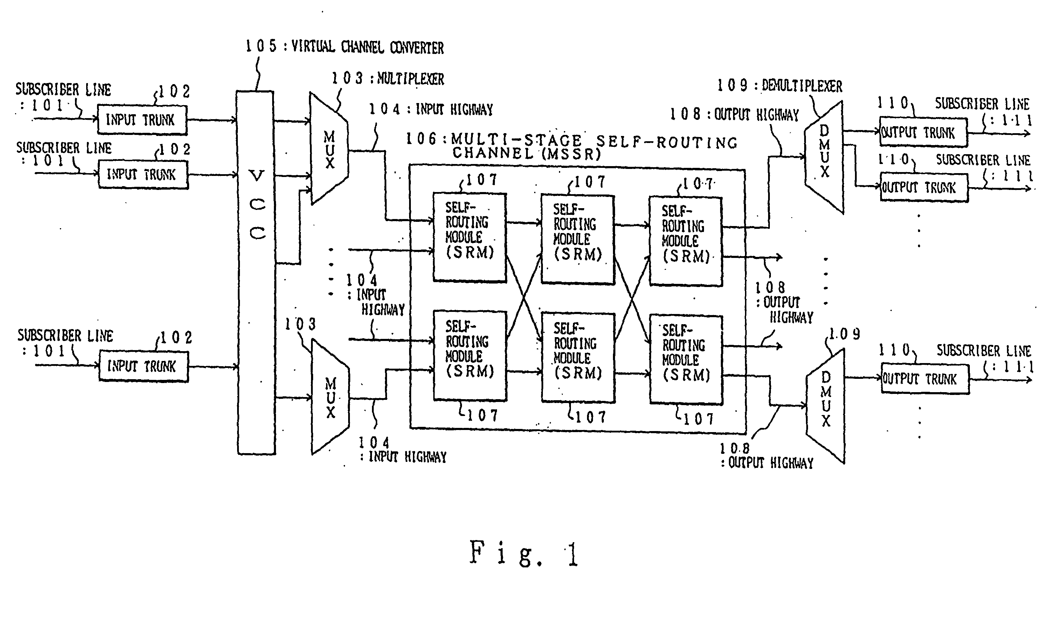

Figure 1 is a schematic view of a generic ATM switching system.

In Figure 1, trunks 102 accommodate respective subscriber lines 101 on the input side. A virtual channel controller (VCC) 105 receives outputs from the trunks 102.

Based on the call control information inputted from a processor (not shown) of the switching system, the VCC 105 exchanges the VCIs, which specify the cells' destinations, attached to the headers of the received cells for the respective input highways 104, with new VCIs specifying the next output node (ATM switching system). At the same time, the VCC 105 adds to the head ends of the cells information specifying the path over which the cells are to be switched to be outputted to destined output highways 108 in a data format called tags.

A plurality of multiplexers (MUXs) 103 partially multiplex respective outputs from the VCC 105. Respective input highways 104 receive outputs from the corresponding multiplexers 103.

A multi-stage self-routing channel (MSSR) 106, which is a virtual channel, receives respective outputs from the MUXs 103. The MSSR 106 comprises a plurality of self-routing modules (SRMs) 107. The MSSR 106 has a plurality (ordinarily two (2) rows and three (3) stages) of SRMs 107. The configuration of the SRMs 107 are further elaborated later.

The MSSR cells to output highways 108, which are connected to respective demultiplexers (DMUXs) 109, which demultiplex the cells and output the demultiplexed cells to subscriber lines 111 on the output side through output trunks 110 corresponding to the respective DMUXs 109.
Figure 1 shows a configuration where cells flow in a single direction over the channels. It goes without saying that channels for cells flowing in the opposite directions can be configured similarly.
Figure 2 shows an exemplary configuration of one of the SRMs 107 shown in Figure 1.

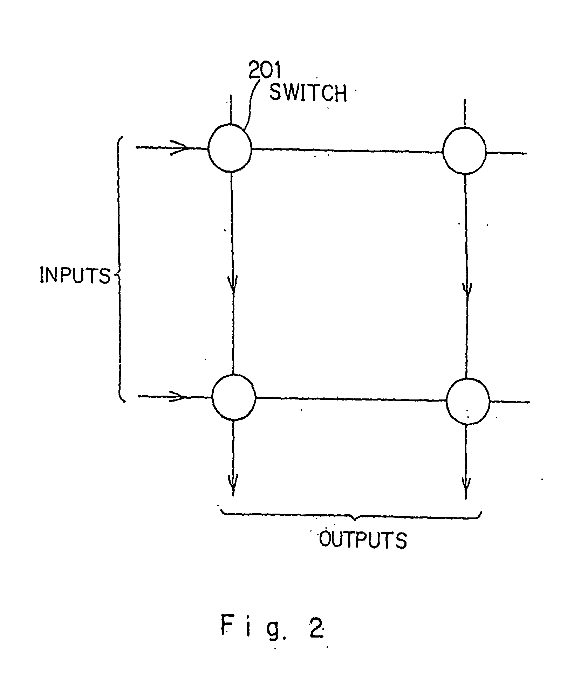

In the example shown in Figure 2, an SRM 107 has two (2) input lines and two (2) output lines, and switches 201 provided at the four (4) crossing points of the input lines and output lines. That is, the four (4) switches of an SRM 107 correspond with two (2) input lines and two (2) output lines. Although an actual channel comprises more input lines and more output lines in reality, since their basic connections are entirely similar to those in the example shown in Figure 2, the SRMs 107 are explained by referring to the 2X2 exemplary configuration having two (2) input lines and two (2) output lines.

The switches 201 judge from the tag data attached to the head ends of cells inputted from input lines whether or not to switch the cells for acceptance. If the switches 201 judge to switch the cells, the switches 201 multiplex the cells on free time slots on output lines. Respective switches 201 independently perform the judging and switching operations through hardware processing.

As is evident from the above explanation, a fault in one of the switches 201 in any of the SRMs 107 shown in Figure 1 causes a severe fault, such as a degradation in communication quality and a stoppage of communication through discarding ATM cells and incorrectly switching ATM cells. Therefore, it is crucial to conduct a test for verifying the normality of the switches.

However, there is no known conventional system for efficiently testing the switches of an ATM switching system. Especially in the configuration, shown in Figure 1, of the MSSR 106 having the SRMs 107 connected in a plurality of stages, the more there are possible paths from an input line to an output line, the more there are the SRMs 107 in the MSSR 106. This causes an inevitable problem of how to efficiently test all such possible paths in realizing an ATM switching system.

In US-A-4,486,877 there is disclosed a communication method and packet switching system in which packets comprising logical addresses and voice-data information are communicated through the system by packet switching networks which are interconnected by high-speed digital trunks with each of the latter being directly terminated on both ends by trunk controllers. During initial call set-up of a particular call, central processors associated with each network in the desired route store the necessary logical to physical address information in the controllers which perform all logical to physical address translations on packets of the call. Each processor has the capability of doing fault detection. In particular there is disclosed a method of conducting a test in a manner in which the central processor generates and transmits a test cell to an associated network and checks on the test cell coming back from the network.

In the paper entitled "Experiments in wideband packet technology" presented by R.W. Muise et al at the 1986 International Zurich Seminar on Digital Communications, 11-13 March 1986, Zurich, Switzerland on pages 135-139 of the proceedings thereof, there is disclosed an experimental integrated package voice data image network employing technology based on advanced speed processing methods and high capacity low delay packet switching. An access interface converts analogue voice to packet voice and interfaces various types of packetised data sources.

### Summary of the Invention

This invention is conceived based on the above background, and aims at efficiently testing all paths in an ATM channel configured by respective switches.

According to the present invention there is provided an ATM channel testing apparatus for testing an asynchronous transfer mode channel formed by self-routing modules connected in multiple stages for switching cells supplied from a plurality of input highways respectively to a plurality of output highways, characterized by: test cell generating means, provided respectively in said input highways, for sequentially generating a plurality of test cells for enabling all crossing points in said self-routing modules, through which cells inputted from said input highways can pass, to switch the test cells, said test cells having test cell identifying information for identifying themselves as test cells and input highway identifying information; and test cell monitoring means, provided respectively in said output highways, for monitoring whether or not a predetermined number of test cells, supplied respectively from said input highways, and corresponding to the number of all possible paths on said self-routing modules for a cell inputted from one of said input highways and to be outputted to one of said output highways, are detected, by extracting said test cells through extraction of said test cell identifying information from cells outputted from said self-routing modules to said output highways, and by extracting said input highway identifying information from said extracted test cells.

Such an apparatus enables an asynchronous transfer mode channel to be tested with ease by simply counting the numbers of test cells from respective input highways, without having to collect information from respective crossing points in self-routing modules regarding whether or not the crossing points switch test cells.

The test cell generators and the test cell monitors respectively need to be provided only for the numbers of the input highways and output highways, and their configurations are simple. Therefore, a configuration far simpler than a conventional configuration, where all crossing points in the self-routing modules have test cell detectors, realizes testing a channel.

### Brief Description of the Drawings

Those in the same field can easily understand additional purposes and features of this invention from the descriptions of the principles and the preferred embodiment of this invention together with the attached drawings. In the drawings;
Figure 1 is a schematic view of a generic ATM switching system;
Figure 2 shows an exemplary configuration of one of the SRMs shown in Figure 1;

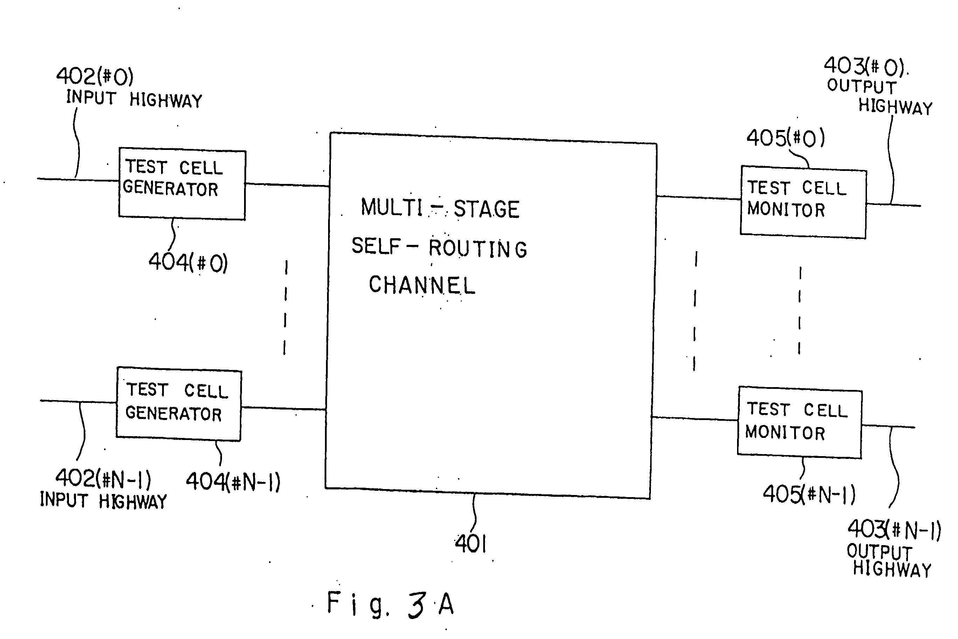

Figure 3A is a schematic view for explaining the invention;

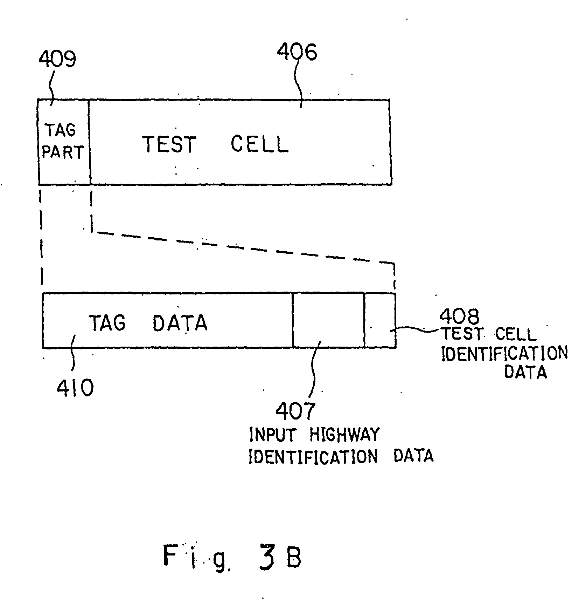

Figure 3B shows the data structure of a test cell in the invention;

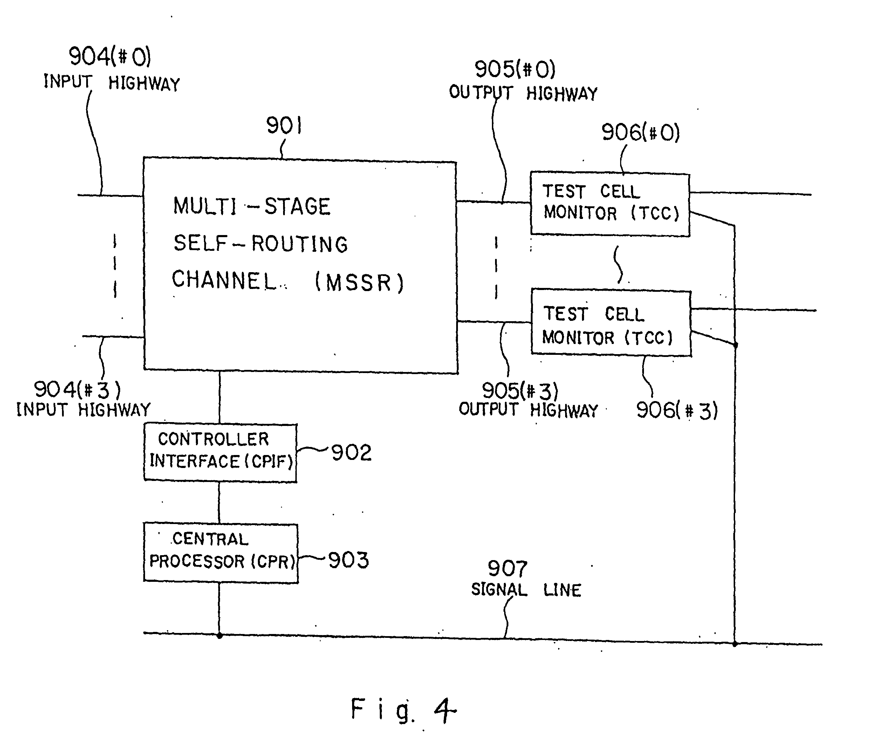

Figure 4 is a block diagram of a preferred embodiment of this invention;

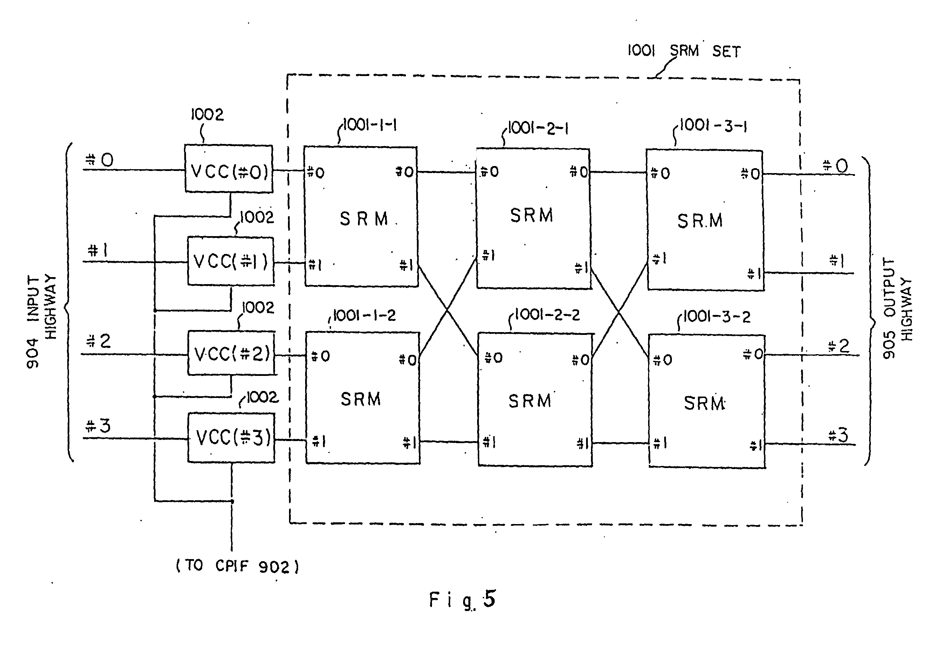

Figure 5 shows the configuration of the MSSR in the preferred embodiment;

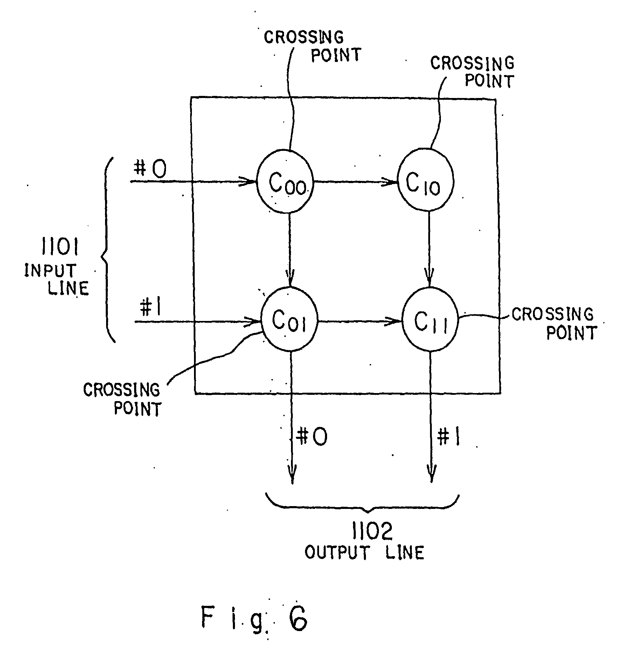

Figure 6 shows the configuration of an SRM in the preferred embodiment;

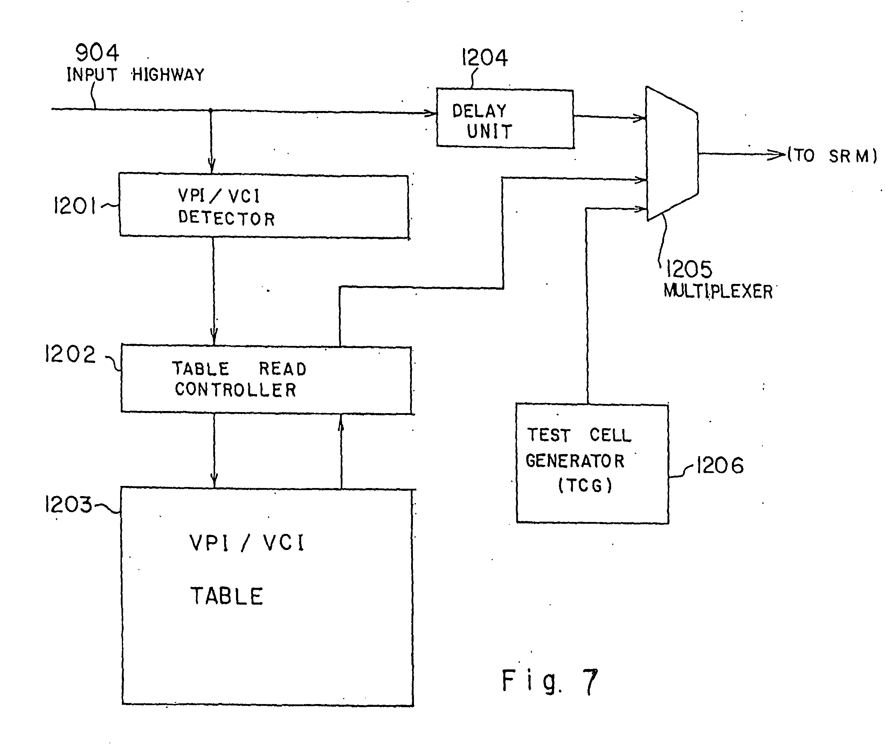

Figure 7 shows the configuration of the VCC in the preferred embodiment;

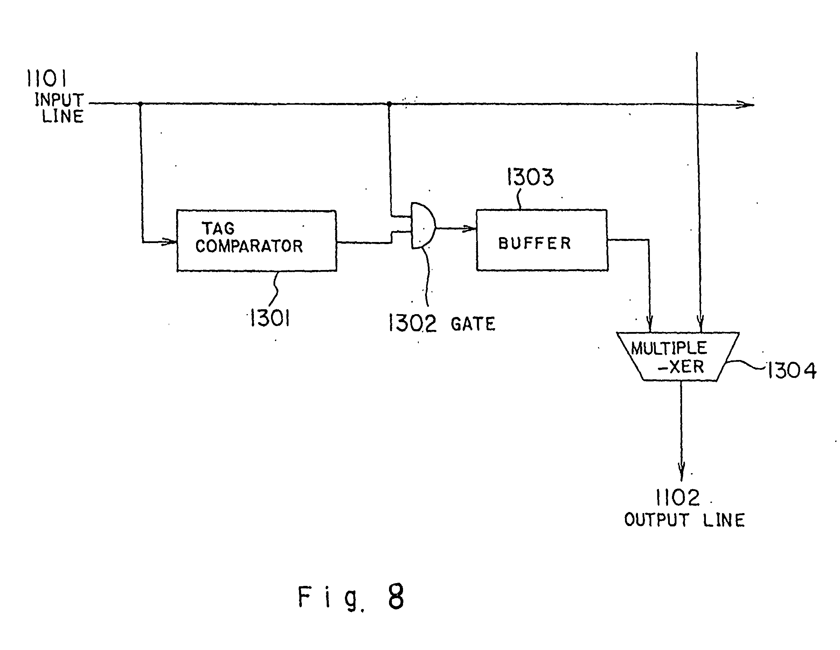

Figure 8 shows the configuration of a crossing point in the preferred embodiment;

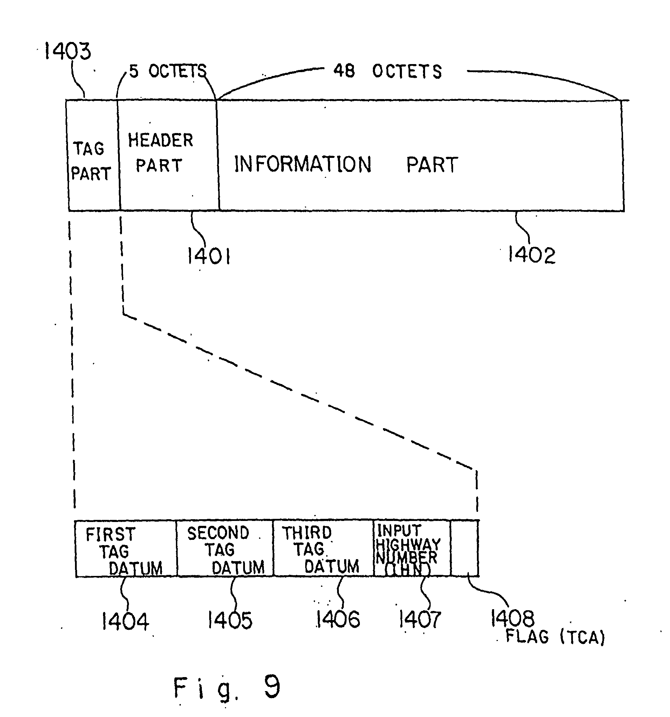

Figure 9 shows the configuration of an ATM cell in the preferred embodiment;

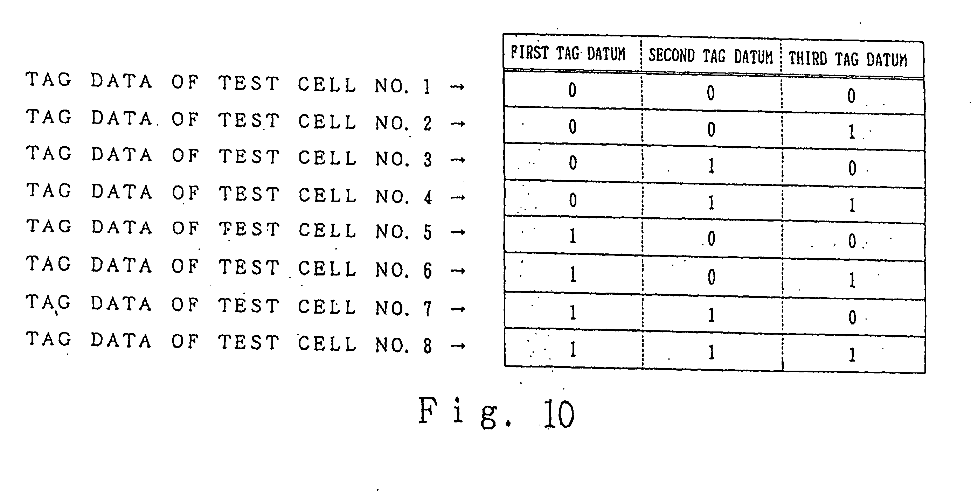

Figure 10 shows the tag datum combinations in tag parts attached to test cells in the preferred embodiment; and

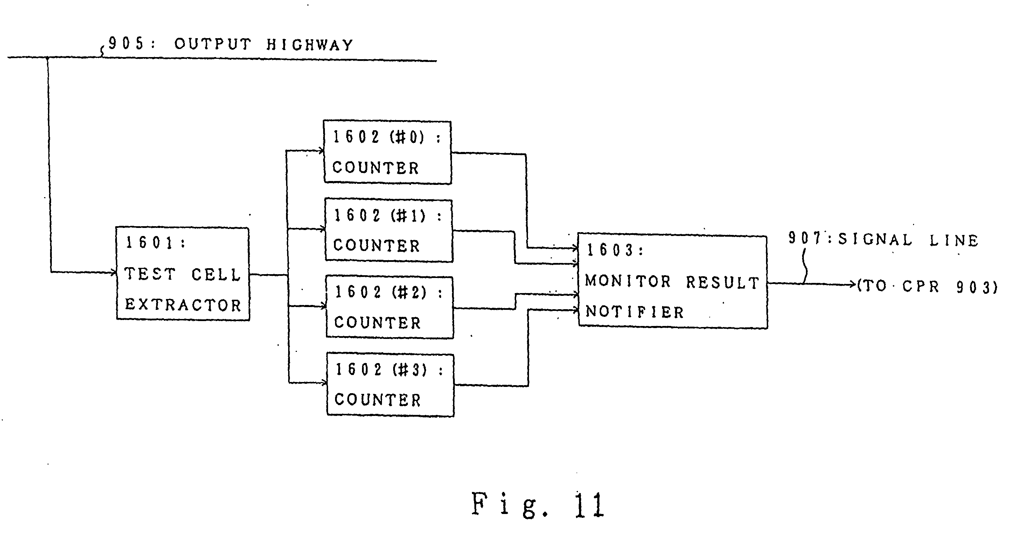

Figure 11 shows the configuration of the TCC in the preferred embodiment.

### Description of the Preferred Embodiments

### Explanation of the Principles

Before describing a preferred embodiment of this invention, its principles are explained.

Figure 3A is a schematic view for explaining this invention, and Figure 3B shows the data structure of a test cell in this invention.

The invention is premised on an ATM channel formed by a multi-stage self - routing channel, comprising self-routing modules 401 connected in plural stages, for switching for connection respective cells inputted from a plurality (any of #0 through #n-1, where n is a integer) of input highways 402 to a plurality (any of #0 through #n-1, where n is an integer) of output highways 403.

Test cell generators 404 are provided for respective input highways 402. A test cell generator 404 sequentially generates a plurality of test cells 406. The test cells 406 are switched at crossing points in all self-routing modules, where cells inputted from the input highway 402 corresponding to the test cell generator 404 pass through. The test cells 406 have test cell identification data 408 for test cell identification and the input highway identification data 407.

The test cell generators 404 are provided respectively e.g. in virtual path identifiers or virtual channel converters for converting virtual channel identifiers into tag data. As shown in Figure 3B, tag data 410 four enabling crossing points in all self-routing modules, through which cells inputted from input highways 402 pass, to respectively switch the cells are attached to a tag part 409 at the head ends of plural test cells 406 generated by the test cell generator 404. Input highway identification data 407 and test cell identification data 408 are attached to free regions in the tag part 409 at the head end of a test cell 406, e.g. as shown in Figure 3B.

Test cell monitors 405 are provided for respective output highways 403. A test cell monitors 405 extracts by test cell identification data 408 test cells 406 from cells outputted from self-routing modules 401 to respective output highways 403 and by extracting input highway identification data 407 from the extracted test cells 406. The test cell monitor 405 monitors whether or not a predetermined number of test cells 406 corresponding to the number of paths on all self-routing modules 401, through which cells inputted from each of the input highways 402 pass to be outputted to each of the output highways 403.

Here, the test cell monitor 405 tests self-routing modules 401 by monitoring whether or not a predetermined number of test cells from respective input highways 402 are detected in a predetermined period of time e.g. after the test cell generator 404 starts generating test cells 406.

In the configuration shown in Figure 3A, when the multi-stage self-routing channel 401 has a fixed configuration, the number of paths through which a cell inputted from an input highway 402 to be outputted to an output highway 403 in the multi-stage self-routing channel 401 is of a determined number. Hence, the test cell generators 404 on respective input highways 402 generate test cells 406 so that they collectively pass through all possible paths, and attach to respective test cells 406 the input highway identification data 407 indicating which input highways 402 supply the test cells 406. The test cell monitors 405 on respective output highways 403 recognize input highway identification data 407 attached to test cells 406 verified as test cells 406 by test cell identification data 408. Then, the test cell monitors 405 test the self-routing modules in the ATM channel by monitoring whether or not a predetermined number of the test cells 406 corresponding to the appropriate input highways 402 are detected in a predetermined time period e.g. after the test cell generators 404 start generating test cells 406.

The above described configuration shown in Figure 3A enables an asynchronous transfer mode channel to be tested with ease by simply counting the numbers of test cells from respective input highways, without having to collect information from respective crossing points in self-routing modules regarding whether or not the crossing points switch test cells.

### Explanation Of A Preferred Embodiment

Figure 4 is a block diagram of a preferred embodiment of this invention. This configuration of an ATM switching system corresponds to that shown in Figure 3A, which is a schematic view for explaining this invention.

A multi-stage self-routing channel (MSSR) 901 exchanges cells inputted from four (4) input highways 904, #0 through #3, and outputs them to four (4) output highways 905, #0 through #3. Here, the numbers of input highways and output highways are not limited to four (4). A central processor (CPR) 903 connected through a controller interface (CPIF) 902 controls the MSSR 901. In addition, four (4) test cell monitors (TCC) 906, #0 through #3, connected respectively to the four (4) output highways 905, #0 through #3, detect the states regarding which input highways 904 supply how many test cells to which output highways 905, and notify the states to the CPR 903 through a signal line 907.

Figure 5 shows the configuration of the MSSR 901 shown in Figure 4 in the preferred embodiment.

The MSSR 901 corresponds to an SRM set 1001 inside the dashed line frame shown in Figure 5, comprising six (6) SRMs 1001-1-1 through 1001-3-2, each switching cells supplied from two (2) input lines #0 and #1 to two (2) output lines #0 and #1, paired in three (3) stages. That is, three (3) SRM pairs 1001-1-1 and 1001-1-2, 1001-2-1 and 1001-2-2, and 1001-3-1 and 1001-3-2 are arrayed from the input highway side to the output highway side in a 2X3 configuration having two (2) rows and three (3) stages. Four (4) VCCs (Virtual Channel Converters) 1002, #0 through #3, are connected respectively to the four (4) input highways 904, #0 through #3. VCC pairs #0 and #1 of 1002, and #2 and #3 of 1002 are connected respectively to the input lines #0 and #1 of the first stage SRMs 1001-1-1 and 1001-1-2. The functions of the VCCs 1002 will be elaborated later.

Figure 6 shows the configuration of an SRM in the SRM set 1001 common to all the SRMs 1001-1-1 through 1001-3-2 in the preferred embodiment, which is similar to that shown in Figure 2. Four (4) crossing points C₀₀ through C₁₁ shown in Figure 6 correspond to the switches 201 shown in Figure 2. As shown in Figure 6, an SRM in the SRM set 1001 switches cells supplied from two (2) input lines 1101, #0 and #1, to two (2) output lines 1102, #0 and #1. Crossing point C₀₀ or C₁₀ selectively outputs cells supplied from #0 of the input lines 1101 to #0 or #1 of the output lines 1102. Crossing point C₀₁ or C₁₁ selectively outputs cells supplied from #1 of the input lines 1101 to #0 or #1 of the output lines 1102. The configuration of the four (4). crossing points C₀₀ through C₁₁.

Figure 7 shows the configuration of a VCC in the preferred embodiment, which is common to all the VCCs 1002, #0 through #3, shown in Figure 5.

A VPI/VCI detector 1201 detects a VPI .(Virtual Path Identifier) and a VCI (Virtual Channel Identifier) attached to the header part of the cells supplied from the input highways 904.

A table read controller 1202 refers to a VPI/VCI table 1203 using the above detected VPI and VCI as the address and reads the corresponding tag data.

A multiplexer 1205 outputs cells delayed by a delay unit 1204 after attaching tag data read by the table read controller 1202 to the head ends of the cells. Here, the CPR 903 shown in Figure 4 sets through the CPIF 902 the conversion table from VPIs and VCIs to tag data stored in the VPI/VCI table 1203.

A test cell generator (TCG) 1206 generates test cells described later when the MSSR 901 (Figure 4) is tested. A multiplexer 1205 multiplexes the test cells on free time slots of the input highways 904.

Figure 8 shows the configuration of a crossing point in the preferred embodiment, which is common to all the crossing points C₀₀ through C₁₁ shown in Figure 6.

A tag comparator 1301 detects the tags attached to the head ends of the cells supplied from #0 or #1 of the input lines 1101 (Refer to Figure 6) and judges whether or not to switch the cells at its own crossing point. Here, when it is judged to switch the cells at its own crossing point, a gate 1302 is turned on, and a buffer 1303 receives the cells inputted succeedingly to the tag data from #0 or #1 of the input lines 1101. Then, a multiplexer 1304 multiplexes the cells stored in the buffer 1303 on the free time slots of #0 or #1 of the output lines 1102. (Refer to Figure 6).

Figure 9 shows the configuration of an ATM cell in the preferred embodiment. Cells supplied from the input highways 904 shown in Figure 4 respectively comprise an information part 1402 having a data length of forty-eight (48) octets for storing actual communication data and a header part 1401 having a data length of five (5) octets for storing address data.

The VCCs 1002 shown in Figures 5 and 7 attach respective tag parts 1403 at the head ends of the cells, i.e. before the header parts 1401. A tag part 1403 comprises a first tag datum 1404, a second tag datum 1405 and a third tag datum 1406 each with one (1) bit, in the preferred embodiment. The first tag datum 1404 contains information specifying to which one of the output lines 1102 #0 and #1 its own cell supplied to SRM 1001-1-1 or SRM 1001-1-2 in the first stage of the MSSR 901 (Refer to Figure 5) is switched. If the value is zero (0), the first tag datum 1404 specifies the cell to be switched to #0 of the output lines 1102. If the value is one (1), the first tag datum 1404 specifies the cell to be switched to #1 of the output lines 1102. As with the first tag datum 1404, the second tag datum 1405 contains information specifying to which one of the output lines 1102 #0 and #1 its own cell supplied to SRM 1001-2-1 or SRM 1001-2-2 in the second stage of the MSSR 901 is switched. Also as with the first tag datum 1404, the third tag datum 1406 contains information specifying to which one of the output lines 1102 #0 and #1 its own cell supplied to SRM 1001-3-1 or SRM 1001-3-2 in the third stage of the MSSR 901 is switched.

On receiving the data specified by the first tag datum 1404, the second tag datum 1405 and the third tag datum 1406, respective crossing points C₀₀ through C₁₁ in each of the SRMs 1001-1-1 through 1001-3-2 shown in Figure 5 have their respective comparators 1301 (refer to Figure 8) refer to the first tag datum 1404, the second tag datum 1405 or the third tag datum 1406, according to the stage of the SRM in the SRM set 1001 to which the crossing points C₀₀ through C₁₁ belong. If a crossing point is connected to #0 of the output lines 1102, the crossing point switches the cell whose first tag datum 1404, second tag datum 1405 or third tag datum 1406 corresponding to its own stage number has value zero (0) and does not switch the cell whose first tag datum 1404, second tag datum 1405 or third tag datum 1406 corresponding to its, own stage number has value one (1).

For instance, assume that #0 of the VCCs 1002 attaches a three (3) bit'value "101", as the first tag datum 1404, the second tag datum 1405 and the third tag datum 1406, to a cell supplied from #0 of the input highways 904 to #1 of the input lines of SRM 1001-1-1 shown in Figure 5, based on the VPI and VCI at the header of the cell. In this case, crossing point C₁₀ (Refer to Figure 6) of SRM 1001-1-1 in the first stage of the MSSR 901 switches to #1 of the output lines the cell supplied from #0 of the input lines of SRM 1001-1-1. Further, crossing point C₀₀ of SRM 1001-2-2 in the second stage of the MSSR 901 switches to #0 of the output lines the cell supplied from #0 of the input lines of SRM 1001-2-2. Finally, crossing point C₁₁ of SRM 1001-3-1 in the third stage of the MSSR 901 switches to #1 of the output lines the cell supplied from #1 of the input lines of SRM 1001-3-1. As shown in Figure 5, #1 of the output lines of SRM 1001-3-1 is connected to #1 of the output highways 905. therefore, the three (3) stage SRMs 1001-1-1, 1001-2-2 and 1001-3-1 of the MSSR 901 switch to #1 of the output highways 905 the cell supplied from #0 of the input highways 904.

Figure 10 shows the tag datum combinations in tag parts attached to test cells in the preferred embodiment.

When the MSSR 901 shown in Figure 4 is tested, the TCG 1206 in each of the VCCs 1002, #0 through #3, respectively connected to the input highways 904, #0 through #3, sequentially generates eight (8) kinds of test cells No.1 through No.8 to which eight (8) combinations of the first tag datum 1404, the second tag datum 1405 and the third tag datum 1406 shown in Figure 10 are attached. Those test cells are multiplexed on #1 of the input highways 904. At the same time, as shown in Figure 9, a flag (TCA) 1408 for test cell identification and an input highway number (IHN) 1407 indicating the number of the input highways 904 supplying the test cell are attached to the tag part 1403 of each of the test cells. The header part 1401 and the information part 1402 (Refer to Figure 9) of a test cell have void data which are not meaningful.

A test cell inputted from one of the input highways 904, #0 through #3, to the MSSR 901 passes through the three (3) stages in the SRM set 1001 to be supplied to one of the output highways 905, #0 through #3. Here, as shown in Figure 6, one SRM in the SRM set 1001 has two (2) crossing points for one of the input lines 1101, and two (2) output lines 1102 selected at a crossing point. Hence, there are eight (8=2³) possible paths for a cell inputted from from one of the input highways 904, #0 through #3, to the MSSR 901 to be outputted from one of the output highways 905, #0 through #3. Accordingly, the eight (8) kinds of test cells No.1 through No.8 to which tag data combinations shown in Figure 10 are attached enable all the crossing points in the SRM set 1001 through which cells inputted from one of the input highways 904 pass to switch the test cells.

#0 through #3 of the TCCs 906 (Refer to Figure 4) provided respectively on #0 through #3 of the output highways 905 detect eight (8) test cells generated for each among #0 through #3 of the input highways 904.

Figure 11 shows the configuration of a TCC 906 in the preferred embodiment.

There are two (2) possible paths for a cell inputted from one of the input highways 904 to be outputted to one of the output highways 905. For example, a cell inputted from #0 of the input highways 904 to SRM 1001-1-1 (Refer to Figure 5) is outputted from SRM 1001-3-1 to #0 of the output highways 905 through one of the two (2) paths by way of either SRM 1001-2-1 or SRM 1001-2-2. This is the case for other combinations of the input highways 904 and the output highways 905. therefore, as long as all the crossing points in the SRM set 1001 of the MSSR 901 are normal, each of the output highways 905 must be able to detect two (2) test cells from each of the input highways 904.

Accordingly, before the TCG 1206 in a VCC 1002 begins generating test cells, after a reset signal (not shown) from the CPR 903 resets #0 through #3 of one (1) bit counters 1602 (Refer to Figure 11) in #0 through #3 of the TCCs 906, the CPR 903 through the CPIF 902 instructs #0 through #3 of the TCGs 1206 to generate test cells.

Thereafter, the test cell extractor 1601 in each among #0 through #3 of the TCCs 906 extracts the IHN 1407 and the TCA 1408 of the tag part 1403 of an inputted cell. When the TCA 1408 identifies the cell as a test cell, one of the one (1) bit counters 1602, #0 through #3, corresponding to the number of the input highways 904, #0 through #3, specified by the IHN 1407, is counted up.

Upon counting up twice, respective counters 1602 notify a monitor result notifier 1603 of the corresponding counter number (one of #0 through #3). Then, the monitor result notifier 1603 through the signal line 907 notified the CPR 903 of the fact that the all the crossing points in the SRM set 1001, which switch test cells from the one corresponding to the counter number of the input highways 904, are normal.

The CPR 903 judges whether or not the MSSR 906 is formal by monitoring whether or not the notifications corresponding to the respective input highways 904 are received in a predetermined period of time after an instruction is issued for test cell generation.

As described above, the preferred embodiment enables a channel to be tested just by monitoring whether or not a predetermined number of test cells from respective input highways 904 are detected at respective output highways 905 through attaching the input highway number showing which one of the input highways 904 generates the test cell to the test cell.

The embodiment takes up a case in which there are four (4) input highways 904 and four (4) output highways 905 and the MSSR 901 comprises the SRM set 1001 having two (2) rows and three (3) stages. However, the above case by no means precludes applying the invention to other channel configurations. When the numbers of the pertinent elements change, only a few modifications need to be made. That is, the respective TCGs 1206 generate a different number of test cells, which the respective TCCs 906 detect.

## Claims

1. An ATM channel testing apparatus for testing an asynchronous transfer mode channel (401;901;1001) formed by self-routing modules (1001-1-1 to 1001-3-2) connected in multiple stages for switching cells supplied from a plurality of input highways (402;904) respectively to a plurality of output highways (403;905), **characterized by**:
test cell generating means (404; 1206), provided respectively in said input highways, for sequentially generating a plurality of test cells for enabling all crossing points in said self-routing modules, through which cells inputted from said input highways can pass, to switch the test cells, said test cells having test cell identifying information (408) for identifying themselves as test cells and input highway identifying information (407); and
test cell monitoring means (405;906), provided respectively in said output highways (403;905), for monitoring whether or not a predetermined number of test cells, supplied respectively from said input highways, and corresponding to the number of all possible paths on said self-routing modules (1001-1-1 to 1001-3-2) for a cell inputted from one of said input highways and to be outputted to one of said output highways, are detected, by extracting said test cells through extraction of said test cell identifying information (408) from cells outputted from said self-routing modules to said output highways, and by extracting said input highway identifying information (407) from said extracted test cells.

2. The ATM channel testing apparatus according to claim 1, wherein:
said test cell generating means (404;1206) are provided in virtual channel converters (1002) for converting virtual path identifiers or virtual channel identifiers to pieces of tag information, and said test cells generated by said test cell generating means have pieces of tag information enabling all crossing points in said self-routing modules through which cells inputted from said input highways can pass to switch cells.

3. The ATM channel testing apparatus according to claim 2, wherein:
said test cell generating means (404;1206) are adapted to attach said input highway identifying information (407) and said test cell identifying information (408) to free regions in the tag parts set in the head ends (409) of said test cells (406) storing said tag information attached to said test cell by said virtual channel converter.

4. The ATM channel testing apparatus according to claim 1, wherein:
said test cell monitoring means (405;906) is adapted to test said self-routing modules by monitoring whether or not a predetermined number of test cells from each of said input highways are detected in a predetermined period of time after said test cell generating means begin generating said test cells.

## Patentansprüche

1. ATM-Kanaltestvorrichtung zum Testen eines Kanals (401; 901; 1001) für einen asynchronen Übertragungsmode, der durch selbstführende Module (1001-1-1 bis 1001-3-2) gebildet ist, die in mehreren Stufen zum Schalten von Zellen verbunden sind, die von einer Vielzahl von Eingangs-Multiplexleitungen (402; 904) jeweils zu einer Vielzahl von Ausgangs-Multiplexleitungen (403; 905) zugeführt werden, **gekennzeichnet durch**:
Testzellen-Erzeugungseinrichtungen (404; 1206), die jeweils in den Eingangs-Multiplexleitungen vorgesehen sind, zum sequentiellen Erzeugen einer Vielzahl von Testzellen, um allen Kreuzungsstellen in den selbstführenden Modulen, **durch** welche von den Eingangs-Multiplexleitungen eingegebene Zellen durchlaufen können, zu ermöglichen, die Testzellen umzuschalten, wobei die Testzellen-Identifizierungsinformation (108) zum Identifizieren von sich selbst als Testzellen haben, und Eingangs-Multiplexleitungs-Identifizierungsinformation (407); und
Testzellen-Überwachungseinrichtungen (405; 906), die jeweils in den Ausgangs-Multiplexleitungen (403; 905) vorgesehen sind, zum Überwachen, ob eine vorbestimmte Anzahl von Testzellen, die jeweils von den Eingangs-Multiplexleitungen zugeführt sind und die der Anzahl von allen möglichen Pfaden auf den selbstführenden Modulen (1001-1-1 bis 1001-3-2) für eine von einer der Eingangs-Multiplexleitungen eingegebene Zelle, erfasst sind oder nicht, indem die Testzellen **durch** eine Extraktion der Testzellen-Identifizierungsinformation (408) aus Zellen extrahiert werden, die aus den selbstführenden Modulen zu den Ausgangs-Multiplexleitungen ausgegeben werden, und indem die Eingangs-Multiplexleitungs-Identifizierungsinformation (407) aus den extrahierten Testzellen extrahiert wird.

2. ATM-Kanaltestvorrichtung nach Anspruch 1, wobei:
die Testzellen-Erzeugungseinrichtungen (404; 1206) in virtuellen Kanalwandlern (1002) zum Umwandeln von virtuellen Pfadidentifizierern oder virtuellen Kanalidentifizierern in Stücke von Kennungsinformation bzw. Tag-Information vorgesehen sind, und die durch die Testzellen-Erzeugungseinrichtungen erzeugten Testzellen Stücke von Kennungsinformation haben, die ermöglicht, dass alle Kreuzungsstellen in den selbstführenden Modulen, durch welche von den Eingangs-Multiplexleitungen eingegebene Zellen laufen können, Zellen umschalten.

3. ATM-Kanaltestvorrichtung nach Anspruch 2, wobei:
die Testzellen-Erzeugungseinrichtungen (404; 1206) dazu geeignet sind, die Eingangs-Multiplexleitungs-Identifizierungsinformation (407) und die Testzellen-Identifizierungsinformation (408) an freie Bereiche in den Kennungsteilen anzubringen, die in den Anfangsenden (406) der Testzellen (406) eingestellt sind, die die an die Testzelle angebrachte Kennungsinformation durch den virtuellen Kanalwandler speichern.

4. ATM-Kanaltestvorrichtung nach Anspruch 1, wobei:
die Testzellen-Überwachungseinrichtungen (405; 906) dazu geeignet sind, die selbstführenden Module dadurch zu testen, dass sie überwachen, ob eine vorbestimmte Anzahl von Testzellen von jeder der Eingangs-Multiplexleitungen in einer vorbestimmten Zeitperiode erfasst ist oder nicht, nachdem die Testzellen-Erzeugungseinrichtungen ein Erzeugen der Testzellen beginnen.

## Revendications

1. Appareil de test de canal ATM servant à contrôler un canal en mode de transfert asynchrone (401 ; 901 ; 1001) formé par des modules d'auto-aiguillage (1001-1-1 à 1001-3-2) connectés en de multiples niveaux pour faire respectivement commuter des cellules fournies depuis une pluralité d'artères d'interconnexion d'entrée (402 ; 904) en une pluralité d'artères d'interconnexion de sortie (403 ; 905), **caractérisé par** :
des moyens (404 ; 1206) de génération de cellule de test, placés respectivement dans lesdites artères d'interconnexion d'entrée, afin de séquentiellement générer une pluralité de cellules de test servant à permettre que tous les points de croisement se trouvant dans lesdits modules d'auto-aiguillage, par l'intermédiaire desquels des cellules introduites depuis lesdites artères d'interconnexion d'entrée peuvent passer, fassent commuter les cellules de test, lesdites cellules de test ayant des informations (408) d'identification de cellule de test servant à les identifier comme étant des cellules de test et des informations (407) d'identification d'artère d'interconnexion d'entrée ; et
des moyens (405 ; 906) moniteurs de cellule de test, respectivement placés dans lesdites artères d'interconnexion de sortie (403 ; 905), servant à vérifier si un nombre prédéterminé de cellules de test, respectivement fournies depuis lesdites artères d'interconnexion d'entrée, et correspondant au nombre de tous les trajets possibles sur lesdits modules d'auto-aiguillage (1001-1-1 à 1001-3-2) pour une cellule introduite depuis l'une desdites artères d'interconnexion d'entrée et devant être délivrée à l'une desdites artères d'interconnexion de sortie, sont ou non détectées, par extraction desdites cellules de test via l'extraction desdites informations (408) d'identification de cellule de test depuis des cellules délivrées par lesdits modules d'auto-aiguillage auxdites artères d'interconnexion de sortie, et par extraction desdites informations (407) d'identification d'artère d'interconnexion d'entrée depuis lesdites cellules de test extraites.

2. Appareil de test de canal ATM selon la revendication 1, où :
lesdits moyens (404 ; 1206) de génération de cellule de test sont placés dans des convertisseurs de canaux virtuels (1002) servant à convertir des identificateurs de trajets virtuels ou des identificateurs de canaux virtuels en éléments d'informations d'étiquette, et lesdites cellules de test générées par lesdits moyens de génération de cellule de test ont des éléments d'informations d'étiquette permettant que tous les points de croisement se trouvant dans lesdits modules d'auto-aiguillage par l'intermédiaire desquels des cellules introduites depuis lesdites artères d'interconnexion d'entrée peuvent passer, fassent commuter des cellules.

3. Appareil de test de canal ATM selon la revendication 2, où :
lesdits moyens (404 ; 1206) de génération de cellule de test sont conçus pour attacher lesdites informations (407) d'identification d'artère d'interconnexion d'entrée et lesdites informations (408) d'identification de cellule de test à des régions libres se trouvant dans des parties d'étiquette positionnées dans les extrémités de tête (409) desdites cellules de test (406) mémorisant lesdites informations d'étiquette attachées à ladite cellule de test par ledit convertisseur de canaux virtuels.

4. Appareil de test de canal ATM selon la revendication 1, où :
ledit moyen (405 ; 906) moniteur de cellule de test est conçu pour contrôler lesdits modules d'auto-aiguillage par vérification du fait qu'un nombre prédéterminé de cellules de test venant de chacune desdites artères d'interconnexion d'entrée sont ou non détectées en une durée prédéterminée après que lesdits moyens de génération de cellule de test ont commencé de générer lesdites cellules de test.
